# EUROPÄISCHE PATENTSCHRIFT

(11) **EP 2 591 232 B1**
(45) Veröffentlichungstag und Bekanntmachung des Hinweises auf die Patenterteilung: **06.05.2020**
(21) Anmeldenummer: 11721259.7
(22) Anmeldetag: 28.04.2011
(51) Int. Cl.: F03D 1/06, G01M 5/00, G01M 11/08, F03D 17/00

(54) **VORRICHTUNG ZUR OPTISCHEN MESSUNG DER BIEGUNG EINES ROTORBLATTS EINER WINDKRAFTANLAGE**
DEVICE FOR OPTICALLY MEASURING THE CURVATURE OF A ROTOR BLADE OF A WIND POWER PLANT
DISPOSITIF DE MESURE OPTIQUE DE LA FLEXION D'UNE PALE DE ROTOR D'UNE ÉOLIENNE

(30) Priorität: 05.07.2010 DE 102010017749
(43) Veröffentlichungstag der Anmeldung: 15.05.2013
(73) Patentinhaber: Nidec SSB Wind Systems GmbH, 48499 Salzbergen (DE)
(72) Erfinder: BERTOLOTTI, Fabio, 48455 Bad Bentheim (DE)
(74) Vertreter: Bossmeyer, Jörg Peter
(86) Internationale Anmeldenummer: PCT/EP2011/056807
(87) Internationale Veröffentlichungsnummer: WO 2012/004020

(56) Entgegenhaltungen:
- WO-A2-2009/143848
- WO-A2-2009/143849

## Beschreibung

Die Erfindung betrifft eine Vorrichtung zur optischen Messung der Biegung eines Rotorblatts einer Windkraftanlage, welches mit seiner Blattwurzel an einer Rotornabe eines Rotors befestigt ist, mit wenigstens einer im Abstand zur Blattwurzel am Rotorblatt befestigten, Licht emittierenden Außenmarkierung, wenigstens einer am Rotorblatt befestigten ersten Kamera, welche das von der Außenmarkierung emittierte Licht empfängt und eine von der relativen Lage der ersten Kamera zu der Außenmarkierung abhängige erste Lageinformation zur Verfügung stellt, einer mit der ersten Kamera gekoppelten Auswerteeinrichtung und einem Positionserfassungsmittel, welches die relative Lage der ersten Kamera zu der Blattwurzel erfasst und eine von dieser Lage abhängige zweite Lageinformation zur Verfügung stellt, wobei die Auswerteeinrichtung wenigstens eine die Biegung des Rotorblatts charakterisierende Größe unter Auswertung der Lageinformationen bestimmt.

Die WO 2009/143848 A2 offenbart eine Vorrichtung zur optischen Messung der Biegung eines Rotorblatts einer Windkraftanlage, welches mit seiner Blattwurzel an einer Rotornabe eines Rotors befestigt ist, mit in der Blattspitze des Rotorblatts angeordneten ersten Lichtquellen, einer in der Mitte des Rotorblatts angeordneten ersten Kamera, welche das von den ersten Lichtquellen emittierte Licht empfängt, in der Nähe der ersten Kamera am Rotorblatt befestigten zweiten Lichtquellen und einer in der Rotornabe angeordneten zweiten Kamera, welche das von den zweiten Lichtquellen emittierte Licht empfängt, wobei die Position der ersten Lichtquellen relativ zu der Rotornabe aus von den Kameras gelieferten Informationen gewonnen werden kann.

Die WO 2009/143849 A2 beschreibt einen Windturbinenrotor mit einer Nabe, mindestens einem an der Nabe befestigten Rotorblatt und mindestens einer mit der Nabe oder starr mit dem Rotorblatt verbundenen Bilderfassungsvorrichtung, wobei zwei oder mehrere Markierer derart an dem Rotorblatt angeordnet sind, dass die Bilderfassungsvorrichtung die Position der Markierer detektieren kann.

Durch die Zunahme der Länge und der Flexibilität von Rotorblättern in Windkraftanlagen arbeiten deren Steuerungen vermehrt darauf hin, während des Betriebs auftretende Belastungen und Schwingungen der Windkraftanlage zu reduzieren. Belastungen der Rotorblätter werden vornehmlich durch aerodynamische Effekte hervorgerufen. Ein direktes Messen der aerodynamischen Belastungen ist aber nicht möglich. Da die Blattbiegungen und die Blattbelastungen in einer engen Beziehung zueinander stehen, bilden Informationen über die Blattbiegungen gute Eingangsinformationen für ein Steuerungssystem einer Windkraftanlage, welches auf Basis dieser Informationen unerwünschte, zyklische Blattbelastungen reduzieren kann, die z.B. auf eine Fehlausrichtung der Rotorachse zu der Windrichtung oder auf vertikale oder horizontale Windscherungen zurückzuführen sind.

In dem Dokument NREL/TP-500-39253, veröffentlicht im Januar 2006, wird eine Methode zum Messen einer Rotorblattbiegung beschrieben, wonach eine in der Nähe der Blattwurzel angeordnete Infrarotkamera mit Infrarotstrahlungsquelle sowie am Rotorblatt befestigte Reflektorstreifen eingesetzt werden. Die mittels der Infrarotstrahlungsquelle beleuchteten Reflektorstreifen reflektieren die Infrarotstrahlung zurück zur Kamera, sodass die Blattbiegung durch Auswertung des von der Kamera aufgenommenen Bilds berechnet werden kann.

Die WO 2010/054661 A2 offenbart eine Methode zur Überwachung der Belastung von Rotorblättern einer Windkraftanlage, die eine Gondel und eine an dieser mittels einer Rotorwelle drehbar gelagerte Rotornabe umfasst, an der zumindest ein Rotorblatt befestigt ist. Das Rotorblatt umfasst einen Reflektor, dessen Position sich in Abhängigkeit von der Belastung des Rotorblatts ändert. In der Gondel sind eine Strahlungsquelle für elektromagnetische Strahlung und ein Strahlungsempfänger angeordnet, wobei ein Strahlungspfad von der Strahlungsquelle zu dem Reflektor und von diesem zurück zu dem Strahlungsempfänger eingerichtet ist. Mittels einer Überwachungsvorrichtung kann eine Auslenkung des belasteten Rotorblatts auf Basis einer Änderung der von dem Strahlungsempfänger empfangenen Strahlung bestimmt werden.

Bei den vorgenannten Methoden führen Schwingungen der Windkraftanlage zu einem Messfehler, da diese Schwingungen eine Bewegung der Kamera verursachen. Somit wird auf der fotosensitiven Fläche der Kamera die Kamerabewegung einer durch eine Blattbiegung hervorgerufenen Bewegung des Reflektorbilds überlagert. Ferner tritt ein Messfehler dadurch auf, dass die Kamera aufgrund einer irreversiblen Deformation der Kamerahalterung und/oder des Rotorblatts verschoben wird. Ein Beispiel für eine solche Deformation ist die Änderung eines ursprünglich kreisförmigen Querschnitts des Rotorblatts in der Nähe der Blattwurzel in einen ovalen Querschnitt, was auf Materialkriechen unter Last zurückzuführen ist.

Herkömmliche kamerabasierte Systeme zum Messen der Blattbiegung an einem oder an mehreren Punkten entlang des Rotorblatts nutzen eine Lichtquelle, die ein oder mehrere Reflektoren beleuchtet, die an vorbestimmten Positionen entlang des Blatts angeordnet sind. Das von den Reflektoren reflektierte Licht wird mittels einer Digitalkamera aufgenommen, die dazu eine fotosensitive Fläche umfasst. Durch Auswertung der Lage der Reflektorbilder auf der fotosensitiven Fläche wird der Versatz der Reflektoren relativ zu der Kameraposition berechnet und daraus die Blattbiegung abgeleitet. Dabei wird zum Maximieren der Messauflösung in die Kamera eine Linse mit einem derart engen Blickwinkel eingesetzt, sodass eine maximale Verschiebung des Reflektorbilds auf der fotosensitiven Fläche erzielt wird, wenn der Reflektor (oder die Reflektoren) einen maximal zu erwartenden Versatz unter Blattbelastung erfährt. Daher liegt der Bereich der Blattwurzel des Rotorblatts in der Regel nicht im Sichtfeld der Kamera.

Mit herkömmlichen kamerabasierten Systemen zum Messen der Blattbiegung sind insbesondere folgende Probleme verbunden:
- Durch Schwingungen der Kamera bewegt sich das Reflektorbild auf der fotosensitiven Fläche der Kamera, sodass das System diese Bewegung fälschlicherweise als Biegung des Rotorblatts interpretiert und meldet.
- Die Position der Kamera relativ zu der Blattwurzel ändert sich mit zunehmender Zeit irreversibel, beispielsweise durch eine Deformation des Rotorblatts im Bereich der Kameraposition aufgrund von Materialkriechen (z.B. ovaler Querschnitts des Blatts), sodass ein Versatz des Reflektorbilds auf der fotosensitiven Fläche auch ohne Blattbiegung hervorgerufen wird. Folglich ergibt sich ein Fehler in der Messung der Blattbiegung.

Ausgehend hiervon liegt der Erfindung die Aufgabe zugrunde, eine Vorrichtung der eingangs genannten Art derart weiterzubilden, dass Fehler bei der Bestimmung der Blattbiegung aufgrund von Kameravibrationen und/oder eines irreversiblen Versatzes der Kamera vermieden oder zumindest reduziert werden können.

Diese Aufgabe wird erfindungsgemäß durch eine Vorrichtung nach Anspruch 1 gelöst. Bevorzugte Weiterbildungen der Erfindung sind in den Unteransprüchen gegeben.

Die erfindungsgemäße Vorrichtung zur optischen Messung der Biegung eines Rotorblatts einer Windkraftanlage, welches mit seiner Blattwurzel an einer Rotornabe eines Rotors befestigt ist, umfasst
- wenigstens eine im Abstand zur Blattwurzel am Rotorblatt befestigte, Licht emittierende Außenmarkierung,
- wenigstens eine am Rotor befestigte erste Kamera, welche das von der Außenmarkierung emittierte Licht empfängt und eine von der relativen Lage der ersten Kamera zu der Außenmarkierung abhängige erste Lageinformation zur Verfügung stellt,
- eine mit der ersten Kamera gekoppelte Auswerteeinrichtung,
- ein Positionserfassungsmittel, welches die relative Lage der ersten Kamera zu der Blattwurzel erfasst und eine von dieser Lage abhängige zweite Lageinformation zur Verfügung stellt, wobei die Auswerteeinrichtung wenigstens eine die Biegung des Rotorblatts charakterisierende Größe unter Auswertung der Lageinformationen bestimmt, wobei das Positionserfassungsmittel wenigstens eine an oder im Bereich der Blattwurzel am Rotor befestigte, Licht emittierende Innenmarkierung und eine zu der ersten Kamera ortsfeste zweite Kamera umfasst, die das von der Innenmarkierung emittierte Licht empfängt, wobei die Sichtfelder der Kameras sich in oder im Wesentlichen in einander entgegengesetzte Richtungen erstrecken und die von dem Positionserfassungsmittel zur Verfügung gestellte zweite Lageinformation abhängig von der relativen Lage der ersten Kamera zu der Innenmarkierung ist.

Da die erste Lageinformation die relative Lage der ersten Kamera zu der Außenmarkierung charakterisiert und die zweite Lageinformation die relative Lage der ersten Kamera zu der Blattwurzel charakterisiert, kann die Biegung des Rotorblatts und/oder die wenigstens eine diese Biegung charakterisierende Größe unabhängig von der Position und/oder der Orientierung der ersten Kamera bestimmt werden. Somit lassen sich die aus dem Stand der Technik bekannten Fehler bei der Bestimmung der Biegung des Rotorblatts (Blattbiegung) deutlich reduzieren.

Die Auswerteeinrichtung ist bevorzugt mit dem Positionserfassungsmittel gekoppelt. Ferner kann das Positionserfassungsmittel separat zu der ersten Kamera vorgesehen sein oder diese umfassen, sodass im letzteren Fall die erste Kamera einen Teil des Positionserfassungsmittels bildet.

Die Auswerteinrichtung leitet bevorzugt von der wenigstens einen die Biegung des Rotorblatts charakterisierenden Größe die Biegung des Rotorblatts ab. Gemäß einer Weiterbildung der Erfindung entspricht die wenigstens eine die Biegung des Rotorblatts charakterisierende Größe der Blattbiegung des Rotorblatts.

Gemäß einer Ausgestaltung der Erfindung sind im Abstand zur Blattwurzel am Rotorblatt mehrere, Licht emittierende Außenmarkierungen befestigt, die vorzugsweise eine unterschiedliche Entfernung zur Blattwurzel aufweisen, wobei die erste Kamera das von den Außenmarkierungen emittierte Licht empfängt, und wobei die von der ersten Kamera zur Verfügung gestellte erste Lageinformation abhängig von der relativen Lage der ersten Kamera zu den Außenmarkierungen ist. Durch den Einsatz mehrerer Außenmarkierungen lässt sich insbesondere die Messgenauigkeit erhöhen. Ferner ist durch das Anordnen der Außenmarkierungen in unterschiedlichen Entfernungen zur Blattwurzel ein Verlauf der Blattbiegung entlang der Blattachse bestimmbar. Die erste Lageinformation charakterisiert insbesondere die relative Lage der ersten Kamera zu den Außenmarkierungen.

Als die wenigstens eine die Biegung des Rotorblatts charakterisierende Größe bestimmt die Auswerteeinrichtung insbesondere die relative Lage der Blattwurzel zu der oder den Außenmarkierungen. Dabei bildet die relative Lage der Blattwurzel zu der oder den Außenmarkierungen insbesondere eine von der Position der ersten Kamera unabhängige Lageinformation, welche vorzugsweise die Biegung des Rotorblatts charakterisiert oder beschreibt.

Die Auswerteeinrichtung berechnet, insbesondere unter Auswertung der zweiten Lageinformation, die relative Lage der ersten Kamera zu der Blattwurzel. Ferner berechnet die Auswerteeinrichtung, insbesondere unter Auswertung der ersten Lageinformation, die relative Lage der ersten Kamera zu der oder den Außenmarkierungen. Vorzugsweise bestimmt die Auswerteeinrichtung aus der relativen Lage der ersten Kamera zu der Blattwurzel und aus der relativen Lage der ersten Kamera zu der oder den Außenmarkierungen die relative Lage der Blattwurzel zu der oder den Außenmarkierungen.

Bevorzugt bildet ein Punkt der Blattwurzel oder ein Punkt im Bereich der Blattwurzel einen Referenzpunkt, der die Lage der Blattwurzel repräsentiert. Dieser Referenzpunkt liegt bevorzugt auf der Blattachse des Rotorblatts und/oder vorzugsweise an dem der Nabe zugewandten Ende des Rotorblatts. Bei Bezugnahmen auf die Lage der Blattwurzel kann somit diese Lage durch die Lage des Referenzpunkts ersetzt werden. Hierdurch kann berücksichtigt werden, dass die Blattwurzel in der Regel eine Ausdehnung hat. Gemäß einer Weiterbildung der Erfindung bestimmt die Auswerteeinrichtung als die wenigstens eine die Biegung des Rotorblatts charakterisierende Größe die relative Lage des Referenzpunkts zu der oder den Außenmarkierungen.

Die Außenmarkierung oder die Außenmarkierungen sind bevorzugt jeweils als Lichtquelle oder als von einer Lichtquelle angestrahlter Reflektor ausgebildet. Gemäß einer Weiterbildung der Erfindung sind die Außenmarkierung oder die Außenmarkierungen jeweils durch das Ende eines lichtführenden Lichtwellenleiters, wie z.B. einer lichtführenden optischen Faser, insbesondere Glasfaser, gebildet, in den vorzugsweise mittels einer oder mehrerer Lichtquellen Licht eingekoppelt wird. Die Lichtquelle oder die Lichtquellen sind z.B. durch eine oder mehrere Leuchtdioden gebildet. Der oder die Reflektoren sind vorzugsweise retro-reflektierend ausgebildet und können somit auch als Retro-Reflektoren bezeichnet werden.

Die erste Kamera ist hinsichtlich ihrer spektralen Empfindlichkeit insbesondere an das Licht angepasst. Das Licht kann im sichtbaren Spektrum liegen. Vorzugsweise handelt es sich aber um Infrarotlicht.

Bevorzugt nimmt die erste Kamera von der oder von den Außenmarkierungen wenigstens ein Bild auf und stellt dieses, insbesondere in Form von Bilddaten, als die erste Lageinformation der Auswerteeinrichtung zur Verfügung. Vorzugsweise bestimmt die Auswerteeinrichtung unter Anwendung wenigstens eines Bildauswertungsverfahrens aus den Bilddaten die relative Lage der ersten Kamera zu der oder den Außenmarkierungen.

Die erste Kamera ist, insbesondere mittels einer Halterung, am oder im Rotor befestigt. Vorzugsweise ist die erste Kamera mittels der Halterung an oder im Bereich der Blattwurzel am Rotor befestigt. Beispielsweise ist die erste Kamera, insbesondere mittels der Halterung, an einer Trennwand im Rotorblatt befestigt. Eine solche Trennwand dient z.B. dazu, ein Hineinfallen von Wartungspersonal und/oder Gegenständen in das Rotorblatt zu vermeiden. In der Trennwand können eine oder mehrere Durchgangsöffnungen vorgesehen sein, durch welche ein oder mehrere optische Signale oder Lichtstrahlen hindurchtreten, die im Zusammenhang mit der erfindungsgemäßen Vorrichtung genutzt werden.

Gemäß einer nicht unter den beanspruchten Erfindungsgegenstand fallenden Ausgestaltung umfasst das Positionserfassungsmittel wenigstens einen oder mehrere an der Halterung befestigte Spannungs- oder Dehnungssensoren, mittels welchen eine Formänderung der Halterung erfasst wird. Dabei ist die von dem Positionserfassungsmittel zur Verfügung gestellte zweite Lageinformation abhängig von der erfassten Formänderung. Durch das Erfassen der Formänderung der Halterung ist die relative Lage der ersten Kamera zu der Blattwurzel bestimmbar.

Gemäß einer nicht unter den beanspruchten Erfindungsgegenstand fallenden Ausgestaltung umfasst das Positionserfassungsmittel wenigstens eine an oder im Bereich der Blattwurzel oder in der Rotornabe angeordnete andere Kamera, mittels welcher eine Lageänderung der ersten Kamera erfasst wird, die an dem Rotorblatt befestigt ist. Dabei ist die von dem Positionserfassungsmittel zur Verfügung gestellte zweite Lageinformation abhängig von der relativen Lage der ersten Kamera zu der anderen Kamera. Hierdurch ist die relative Lage der ersten Kamera zu der Blattwurzel bestimmbar. Die andere Kamera bildet bevorzugt einen Teil des Positionserfassungsmittels. Die erste Kamera ist insbesondere im Sichtfeld der anderen Kamera angeordnet. Die andere Kamera ist z.B. am Rotorblatt, am Blattlager oder an der Rotornabe befestigt. Bevorzugt ist die andere Kamera starr an der Rotornabe, insbesondere an einem starr mit der Rotornabe verbundenen Teil des Blattlagers, befestigt. Somit ist mittels der anderen Kamera zusätzlich eine Drehung der ersten Kamera um die Blattachse des Rotorblatts relativ zu der Rotornabe und/oder der anderen Kamera erfassbar. Eine solche Drehung tritt z.B. beim Drehen des Rotorblatts um seine Blattachse relativ zu der Rotornabe auf (was auch als "Pitchen" bezeichnet wird). Insbesondere ist mittels der anderen Kamera zusätzlich eine Drehung des Rotorblatts um seine Blattachse relativ zu der Rotornabe erfassbar. Vorzugsweise wird mittels der Auswerteeinrichtung zusätzlich eine Drehung des Rotorblatts um seine Blattachse relativ zu der Rotornabe bestimmt.

Bevorzugt nimmt die andere Kamera von der ersten Kamera wenigstens ein Bild auf und stellt dieses, insbesondere in Form von Bilddaten, als die zweite Lageinformation der Auswerteeinrichtung zur Verfügung. Vorzugsweise berechnet die Auswerteeinrichtung unter Anwendung wenigstens eines Bildauswertungsverfahrens aus den Bilddaten die relative Lage der ersten Kamera zu der anderen Kamera. Die andere Kamera ist aber vorzugsweise an oder im Bereich der Blattwurzel oder in der Rotornabe angeordnet. Somit berechnet die Auswerteeinrichtung unter Anwendung wenigstens eines Bildauswertungsverfahrens aus den Bilddaten insbesondere die relative Lage der ersten Kamera zu der Blattwurzel.

Gemäß der Erfindung umfasst das Positionserfassungsmittel wenigstens eine an oder im Bereich der Blattwurzel am Rotor befestigte, Licht emittierende Innenmarkierung, wobei eine zu der ersten Kamera ortsfeste zweite Kamera das von der Innenmarkierung emittierte Licht empfängt. Dabei ist die von dem Positionserfassungsmittel zur Verfügung gestellte zweite Lageinformation abhängig von der relativen Lage der ersten Kamera zu der Innenmarkierung. Hierdurch ist die relative Lage der ersten Kamera zu der Blattwurzel bestimmbar. Die zweite Kamera bildet hierbei einen Teil des oder das Positionserfassungsmittel.

Gemäß einer Weiterbildung der Erfindung umfasst das Positionserfassungsmittel mehrere an oder im Bereich der Blattwurzel am Rotor befestigte, Licht emittierende Innenmarkierungen, die vorzugsweise an unterschiedlichen Orten positioniert sind, wobei die zu der ersten Kamera ortsfeste zweite Kamera das von den Innenmarkierungen emittierte Licht empfängt. Dabei ist die von dem Positionserfassungsmittel zur Verfügung gestellte zweite Lageinformation abhängig von der relativen Lage der ersten Kamera zu den Innenmarkierungen. Hierdurch ist die relative Lage der ersten Kamera zu der Blattwurzel bestimmbar. Die zweite Kamera bildet hierbei einen Teil des oder das Positionserfassungsmittel.

Gemäß einer nicht unter den beanspruchten Erfindungsgegenstand fallenden ersten Variante ist die erste Kamera in einem dem Rotorblatt gegenüberliegenden Bereich der Rotornabe angeordnet und an dieser befestigt. Bei der ersten Variante bildet die erste Kamera bevorzugt einen Teil des Positionserfassungsmittels. Eine zweite Kamera ist hierbei nicht zwingend erforderlich ist.

Gemäß einer nicht unter den beanspruchten Erfindungsgegenstand fallenden zweiten Variante ist wenigstens ein fest mit der ersten Kamera verbundener und vorzugsweise in deren Sichtfeld angeordneter Spiegel vorgesehen, mittels welchem das von der oder den Innenmarkierungen emittierte Licht in Richtung auf die erste Kamera reflektiert wird. Gemäß einer nicht unter den beanspruchten Erfindungsgegenstand fallenden Abwandlung der zweiten Variante sind mehrere mit der ersten Kamera verbundene und vorzugsweise in deren Sichtfeld angeordnete Spiegel vorgesehen, mittels welchen das von der oder den Innenmarkierungen emittierte Licht in Richtung auf die erste Kamera reflektiert wird. Bei der zweiten Variante und/oder deren Abwandlung bildet die erste Kamera bevorzugt einen Teil des Positionserfassungsmittels. Eine zweite Kamera ist hierbei nicht zwingend erforderlich ist.

Gemäß einer unter den beanspruchten Erfindungsgegenstand fallenden dritten Variante ist die zweite Kamera vorgesehen, wobei die Kameras insbesondere in enger räumlicher Nähe zueinander angeordnet sind. Vorzugsweise sind die Kameras zu einer baulichen Einheit zusammengefasst. Insbesondere ist die zweite Kamera mit der Auswerteeinrichtung gekoppelt.

Die erste, die zweite und/oder die dritte Variante können auch miteinander kombiniert werden.

Die Innenmarkierung oder die Innenmarkierungen sind bevorzugt jeweils als Lichtquelle oder als von einer Lichtquelle angestrahlter Reflektor ausgebildet. Gemäß einer Weiterbildung der Erfindung sind die Innenmarkierung oder die Innenmarkierungen jeweils durch das Ende eines lichtführenden Lichtwellenleiters, wie z.B. einer lichtführenden optischen Faser, insbesondere Glasfaser, gebildet, in den vorzugsweise mittels einer oder mehrerer Lichtquellen Licht eingekoppelt wird. Die Lichtquelle oder die Lichtquellen sind z.B. durch eine oder mehrere Leuchtdioden gebildet. Der oder die Reflektoren sind vorzugsweise retro-reflektierend ausgebildet und können somit auch als Retro-Reflektoren bezeichnet werden.

Bevorzugt nimmt die zweite Kamera von der oder den Innenmarkierungen wenigstens ein Bild auf und stellt dieses insbesondere in Form von Bilddaten als die zweite Lageinformation der Auswerteeinrichtung zur Verfügung. Vorzugsweise berechnet die Auswerteeinrichtung unter Anwendung wenigstens eines Bildauswertungsverfahrens aus den Bilddaten die relative Lage der ersten Kamera oder zweiten Kamera zu der oder den Innenmarkierungen. Da die beiden Kameras ortsfest zueinander sind, ist mittels der Auswerteeinrichtung aus der berechneten relativen Lage der zweiten Kamera zu der oder den Innenmarkierungen die relative Lage der ersten Kamera zu der oder den Innenmarkierungen ableitbar. Das mittels der zweiten Kamera von der oder den Innenmarkierungen gewonnene Bild ist vorzugsweise ein anderes Bild als das Bild, das mittels der ersten Kamera von der oder den Außenmarkierungen gewonnen wird. Gemäß einer nicht unter den beanspruchten Erfindungsgegenstand fallenden Alternative ist das mittels der ersten Kamera von der oder den Innenmarkierungen und von der oder den Außenmarkierungen gewonnene Bild bevorzugt ein gemeinsames Bild, wenn lediglich eine Kamera verwendet wird.

Gemäß einer Ausgestaltung der Erfindung umfasst das Rotorblatt einen Hohlraum, in dem die Außenmarkierung oder die Außenmarkierungen angeordnet sind. Bevorzugt ist auch die erste Kamera in dem Hohlraum angeordnet. Gemäß einer nicht unter den beanspruchten Erfindungsgegenstand fallenden Alternative kann die erste Kamera in der Rotornabe angeordnet sein. Vorzugsweise ist die andere oder zweite Kamera in dem Hohlraum angeordnet. Alternativ kann die andere oder zweite Kamera auch in der Rotornabe angeordnet sein. Bevorzugt ist die Innenmarkierung oder sind die Innenmarkierungen in dem Hohlraum angeordnet.

Die Innenmarkierung oder die Innenmarkierungen sind bevorzugt am Rotorblatt, am Blattlager oder an der Rotornabe befestigt. Gemäß einer Weiterbildung der Erfindung sind die Innenmarkierung oder die Innenmarkierungen starr an der Rotornabe, insbesondere an einem starr mit der Rotornabe verbundenen Teil des Blattlagers, befestigt. Somit ist mittels der zweiten Kamera zusätzlich eine Drehung der ersten Kamera und/oder der zweiten Kamera um die Blattachse des Rotorblatts relativ zu der Rotornabe und/oder der oder den Innenmarkierungen erfassbar. Eine solche Drehung tritt z.B. beim Drehen des Rotorblatts um seine Blattachse relativ zu der Rotornabe auf. Insbesondere ist mittels der zweiten Kamera zusätzlich eine Drehung des Rotorblatts um seine Blattachse relativ zu der Rotornabe erfassbar. Vorzugsweise wird mittels der Auswerteeinrichtung zusätzlich eine Drehung des Rotorblatts um seine Blattachse relativ zu der Rotornabe bestimmt.

Die Offenbarung betrifft ferner eine Windkraftanlage mit
- einem durch Wind um eine Rotorachse drehbaren Rotor, der eine Rotornabe und wenigstens ein an der Rotornabe befestigtes und sich von dieser in Richtung einer quer oder im Wesentlichen quer zur Rotorachse verlaufenden Blattachse wegerstreckendes Rotorblatt umfasst,
- wenigstens einem elektrischen Generator, der mit dem Rotor mechanisch gekoppelt und von diesem antreibbar ist, und
- einer erfindungsgemäßen Vorrichtung zur optischen Messung der Biegung des Rotorblatts.

Die Windkraftanlage kann gemäß allen im Zusammenhang mit der erfindungsgemäßen Vorrichtung erläuterten Ausgestaltungen weitergebildet sein.

Die Offenbarung betrifft auch ein Verfahren zur optischen Messung der Biegung des Rotorblatts einer Windkraftanlage mittels einer erfindungsgemäßen Vorrichtung.

Ferner betrifft die Offenbarung die Verwendung einer erfindungsgemäßen Vorrichtung zur optischen Messung der Biegung des Rotorblatts einer Windkraftanlage.

Bevorzugt wird die Blattbiegung folgendermaßen bestimmt:
- In einem ersten Schritt wird die relative Lage der ersten Kamera zu der Blattwurzel unter Auswertung der zweiten Lageinformation berechnet.
- In einem zweiten Schritt wird die relative Lage der ersten Kamera zu der oder den Außenmarkierungen unter Auswertung der ersten Lageinformation berechnet.
- In einem dritten Schritt wird aus den in dem ersten Schritt und in dem zweiten Schritt berechneten Lagen die relative Lage der Blattwurzel zu der oder den Außenmarkierungen bestimmt.

Die oben genannten Schritte werden bevorzugt mittels der Auswerteeinrichtung durchgeführt.

Die Erfindung wird nachfolgend anhand bevorzugter Ausführungsformen unter Bezugnahme auf die Zeichnung beschrieben. In der Zeichnung zeigen:
- Fig. 1: eine schematische Ansicht einer Windkraftanlage,
- Fig. 2: eine schematische und teilweise Darstellung des aus Fig. 1 ersichtlichen Rotors mit einer Vorrichtung gemäß einer nicht unter den beanspruchten Erfindungsgegenstand fallenden ersten Ausführungsform,
- Fig. 3: eine schematische und teilweise Darstellung des Rotors mit einer Vorrichtung gemäß einer unter den beanspruchten Erfindungsgegenstand fallenden zweiten Ausführungsform,
- Fig. 4: eine schematische und teilweise Darstellung des Rotors mit einer Vorrichtung gemäß einer nicht unter den beanspruchten Erfindungsgegenstand fallenden dritten Ausführungsform,
- Fig. 5: eine schematische und teilweise Darstellung des Rotors mit einer Vorrichtung gemäß einer nicht unter den beanspruchten Erfindungsgegenstand fallenden vierten Ausführungsform,
- Fig. 6: eine schematische und teilweise Darstellung des Rotors mit einer Vorrichtung gemäß einer nicht unter den beanspruchten Erfindungsgegenstand fallenden fünften Ausführungsform,
- Fig. 7: eine schematische und teilweise Darstellung des Rotors mit einer Vorrichtung gemäß einer nicht unter den beanspruchten Erfindungsgegenstand fallenden Abwandlung der fünften Ausführungsform,
- Fig. 8: ein mittels einer Kamera aufgenommenes Bild in schematischer Darstellung,
- Fig. 9: eine Lichtquelle und einen Reflektor einer Vorrichtung gemäß einer Variante der Ausführungsformen und
- Fig. 10: eine Lichtquelle und einen Lichtwellenleiter einer Vorrichtung gemäß einer anderen Variante der Ausführungsformen.

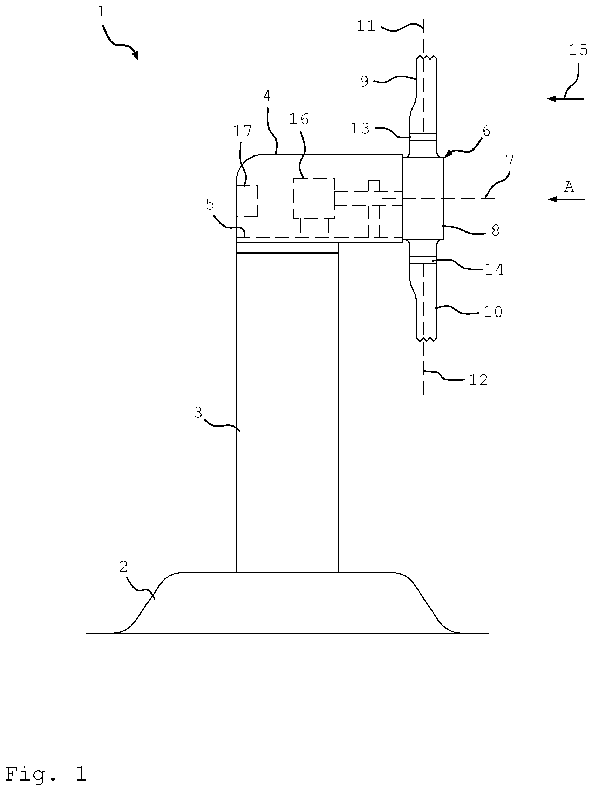

Aus Fig. 1 ist eine Windkraftanlage 1 ersichtlich, wobei ein auf einem Fundament 2 aufstehender Turm 3 an seinem dem Fundament 2 abgewandten Ende mit einem Maschinenhaus 4 verbunden ist. Das Maschinenhaus 4 umfasst einen Maschinenträger 5, an dem ein Rotor 6 um eine Rotorachse 7 drehbar gelagert ist, der eine Rotornabe 8 und damit verbundene Rotorblätter 9 und 10 aufweist, die jeweils um ihre Blattachse 11 bzw. 12 relativ zu der Rotornabe 8 drehbar sind. Jedes der Rotorblätter 9 und 10 ist mit einem Blattwinkelverstellantrieb 13 bzw. 14 mechanisch gekoppelt, mittels welchem das jeweilige Rotorblatt um die zugehörige Blattachse drehbar ist. Der Rotor 6 ist mechanisch mit einem elektrischen Generator 16 gekoppelt, der in dem Maschinenhaus 4 angeordnet und an dem Maschinenträger 5 befestigt ist. Der Rotor 6 wird durch Wind 15 um seine Rotorachse 7 gedreht, wobei die Rotationsenergie des Rotors 6 zu einem großen Teil mittels des Generators 16 in elektrische Energie umgewandelt wird. Für den kontrollierten Betrieb der Windkraftanlage 1 ist eine Windkraftanlagensteuerung 17 vorgesehen, mittels welcher unter anderem die Blattwinkelverstellantriebe gesteuert werden.

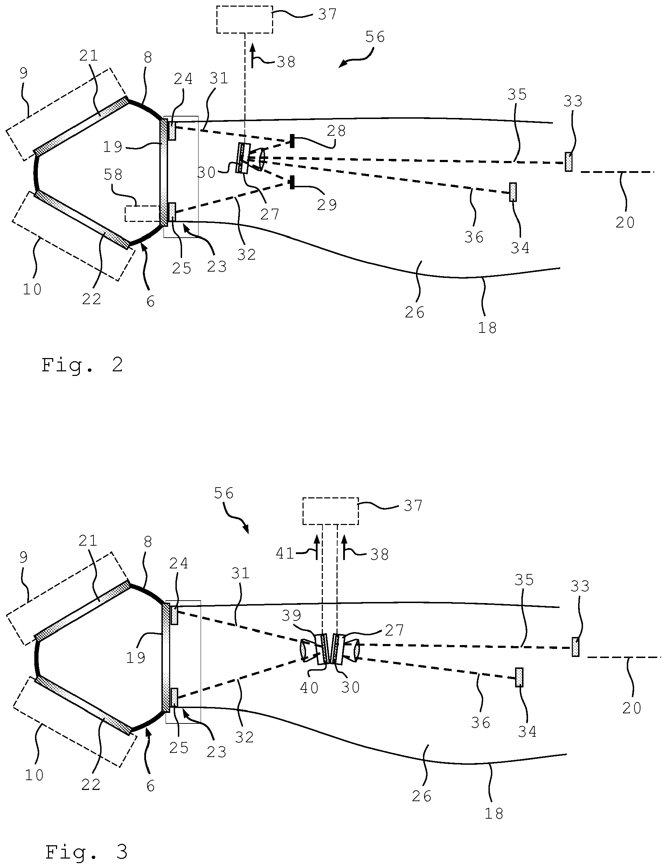

Fig. 2 zeigt eine schematische und teilweise Darstellung des Rotors 6 in Blickrichtung A aus Fig. 1, wobei an der Rotornabe 8 ein drittes Rotorblatt 18 mittels eines Blattlagers 19 um seine Blattachse 20 drehbar gelagert ist (in Fig. 1 ist das Rotorblatt 18 durch die Rotornabe 8 verdeckt). Wie die Rotorblätter 9 und 10 ist auch das Rotorblatt 18 mit einem schematisch angedeuteten Blattwinkelverstellantrieb 58 mechanisch gekoppelt und mittels diesem um die Blattachse 20 drehbar. Auch sind die Blattlager 21 und 22 für die Rotorblätter 9 und 10 dargestellt.

Fig. 2 zeigt ferner eine ganz oder zumindest teilweise in den Rotor 6 integrierte Vorrichtung (Messvorrichtung) 56 gemäß einer nicht unter den beanspruchten Erfindungsgegenstand fallenden ersten Ausführungsform, die nachfolgend erläutert wird. Das an dem Blattlager 19 befestigte Ende des Rotorblatts 18 wird als Blattwurzel 23 bezeichnet, wobei im Bereich der Blattwurzel 23 zwei Licht emittierende Innenmarkierungen 24 und 25 angeordnet und an dem Rotorblatt 18 befestigt sind. Alternativ können die Innenmarkierungen 24 und 25 auch an dem Blattlager 19 befestigt sein. Im Abstand zu der Blattwurzel 23 ist in einem Hohlraum 26 des Rotorblatts 18 eine Kamera 27 angeordnet und an dem Rotorblatt 18 befestigt. Mit der Kamera 27 sind zwei Spiegel 28 und 29 fest verbunden, welche das von den Innenmarkierungen 24 und 25 emittierte Licht auf eine fotosensitive Fläche 30 der Kamera 27 reflektieren. Der Strahlengang des von der Innenmarkierung 24 emittierten Lichts ist dabei mit dem Bezugszeichen 31 und der Strahlengang des von der Innenmarkierung 25 emittierten Lichts mit dem Bezugszeichen 32 gekennzeichnet.

Im Abstand zu der Blattwurzel 23 und der Kamera 27 sind zwei Licht emittierende Außenmarkierungen 33 und 34 in dem Hohlraum 26 angeordnet und an dem Rotorblatt 18 befestigt. Das von den Außenmarkierungen 33 und 34 emittierte Licht trifft auf die fotosensitive Fläche 30 der Kamera 27 auf, wobei der Strahlengang des von der Außenmarkierung 33 emittierten Lichts mit dem Bezugszeichen 35 und der Strahlengang des von der Außenmarkierung 34 emittierten Lichts mit dem Bezugszeichen 36 gekennzeichnet ist.

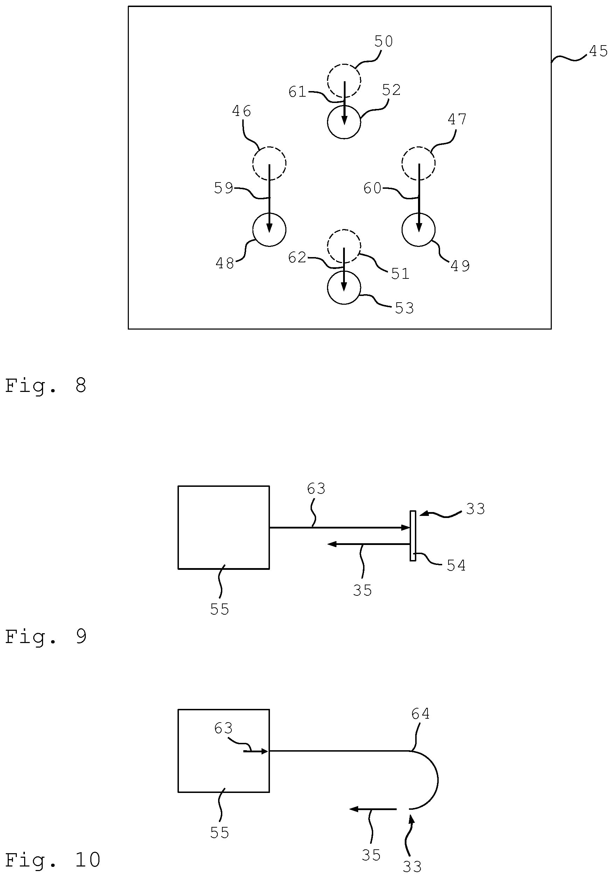

Die Kamera 27 ist elektrisch mit einer schematisch dargestellten Auswerteeinrichtung 37 verbunden, die im Rotorblatt 18, in der Rotornabe 8 oder an einer anderen geeigneten Stelle der Windkraftanlage 1 befestigt ist. Beispielsweise kann die Auswerteeinrichtung 37 auch durch die Windkraftanlagensteuerung 17 gebildet sein. Das von der Kamera 27 aufgenommene Bild 45 (siehe Fig. 8) wird in Form von elektronischen Bilddaten 38 der Auswerteeinrichtung 37 zugeführt, wobei die Bilddaten 38 eine von der relativen Lage der Kamera 27 zu den Außenmarkierungen 33 und 34 abhängige erste Lageinformation und eine von der relativen Lage der Kamera 27 zu den Innenmarkierungen 24 und 25 abhängige zweite Lageinformation umfassen.

Die Auswerteeinrichtung 37 berechnet unter Anwendung wenigstens eines Bildauswertungsverfahrens die relative Lage der Kamera 27 zu der Blattwurzel 23 sowie die relative Lage der Kamera 27 zu den Außenmarkierungen 33 und 34. Aus den berechneten Lagen bestimmt die Auswerteeinrichtung dann die relative Lage der Blattwurzel 23 zu den Außenmarkierungen 33 und 34, wobei diese relative Lage die Biegung des Rotorblatts 18 charakterisiert.

Aus Fig. 3 ist eine schematische und teilweise Darstellung des Rotors 6 mit einer Messvorrichtung 56 gemäß einer unter den beanspruchten Erfindungsgegenstand fallenden zweiten Ausführungsform ersichtlich, wobei zu der ersten Ausführungsform ähnliche oder identische Merkmale mit denselben Bezugszeichen wie bei der ersten Ausführungsform bezeichnet sind. Zusätzlich zu der Kamera 27 ist in dem Hohlraum 26 eine Kamera 39 mit einer fotosensitiven Fläche 40 vorgesehen, auf welche das von den Innenmarkierungen 24 und 25 emittierte Licht auftrifft. Die Sichtfelder der Kameras erstrecken sich dabei insbesondere in oder im Wesentlichen in einander entgegengesetzte Richtungen. Jede der Kameras 27 und 39 ist mit der Auswerteeinrichtung 37 elektrisch verbunden und übermittelt an diese elektronische Bilddaten 38 bzw. 41. Dabei umfassen die Bilddaten 38 von der Kamera 27 eine von der relativen Lage der Kamera 27 zu den Außenmarkierungen 33 und 34 abhängige erste Lageinformation, wobei die von der Kamera 39 gelieferten Bilddaten 41 eine von der relativen Lage der Kamera 39 zu der Blattwurzel 23 abhängige zweite Lageinformation umfassen. Die Kameras 27 und 39 sind ortsfest zueinander angeordnet und bilden eine kompakte bauliche Einheit.

Aus den Bilddaten 41 berechnet die Auswerteeinrichtung 37 unter Anwendung wenigstens eines Bildauswertungsverfahrens die relative Lage der Kamera 39 zu der Blattwurzel 23. Da die beiden Kameras ortsfest zueinander sind, charakterisiert diese Lage auch die relative Lage der Kamera 27 zu der Blattwurzel 23, sodass die relative Lage der Kamera 27 zu der Blattwurzel 23 mittels der Auswerteeinrichtung 37 berechnet wird. Ferner wird mittels der Auswerteeinrichtung 37 unter Anwendung wenigstens eines Bildauswertungsverfahrens aus den Bilddaten 38 die relative Lage der Kamera 27 zu den Außenmarkierungen 33 und 34 berechnet. Danach bestimmt die die Auswerteeinrichtung 37 aus den berechneten Lagen die relative Lage der Blattwurzel 23 zu den Außenmarkierungen 33 und 34, wobei diese relative Lage die Biegung des Rotorblatts 18 charakterisiert. Gemäß der zweiten Ausführungsform sind somit keine Spiegel erforderlich.

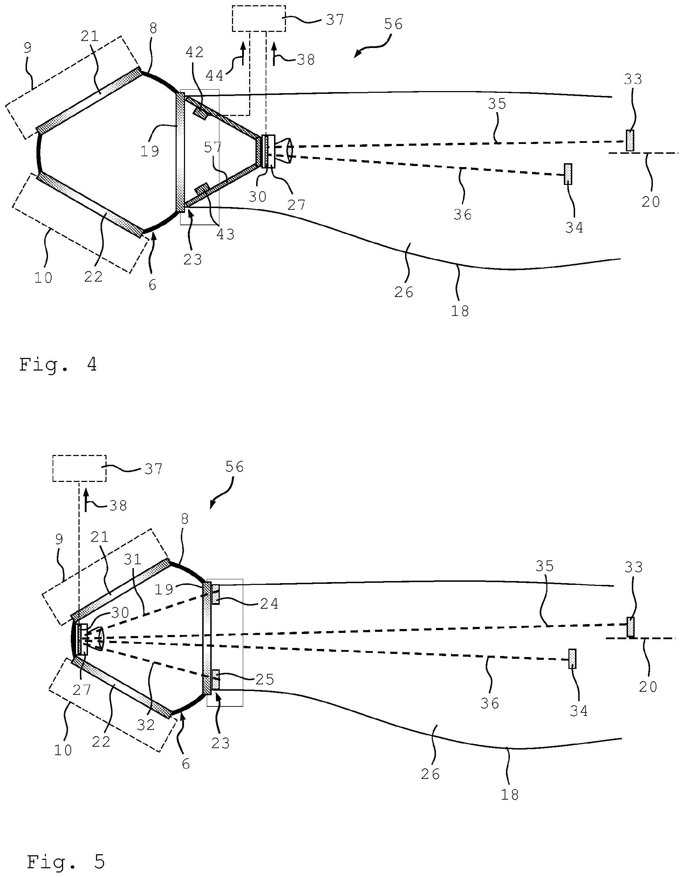

Aus Fig. 4 ist eine schematische und teilweise Darstellung des Rotors 6 mit einer Messvorrichtung 56 gemäß einer nicht unter den beanspruchten Erfindungsgegenstand fallenden dritten Ausführungsform ersichtlich, wobei zu den vorherigen Ausführungsformen ähnliche oder identische Merkmale mit denselben Bezugszeichen wie bei den vorherigen Ausführungsformen bezeichnet sind. Die dritte Ausführungsform ist eine Abwandlung der zweiten Ausführungsform, wobei anstelle der Innenmarkierungen 24 und 25 und der zweiten Kamera 39 Spannungs- oder Dehnungssensoren 42 und 43 an einer Halterung 57 angeordnet sind, mittels welcher die Kamera 27 an der Blattwurzel 23 oder an dem Blattlager 19 befestigt ist. Mittels der Sensoren 42 und 43 ist eine mechanische Verformung der Halterung 57 erfassbar, sodass die elektrisch mit der Auswerteeinrichtung 37 verbundenen Sensoren 42 und 43 Verformungsdaten 44 an die Auswerteeinrichtung 37 liefern. Dabei umfassen die Bilddaten 38 von der Kamera 27 eine von der relativen Lage der Kamera 27 zu den Außenmarkierungen 33 und 34 abhängige erste Lageinformation, wobei die von den Sensoren 42 und 43 gelieferten Verformungsdaten 44 eine von der relativen Lage der Kamera 27 zu der Blattwurzel 23 abhängige zweite Lageinformation umfassen.

Aus den Verformungsdaten 44 berechnet die Auswerteeinrichtung 37 die relative Lage der Kamera 27 zu der Blattwurzel 23. Unter Anwendung wenigstens eines Bildauswertungsverfahrens berechnet die Auswerteeinrichtung 37 aus den Bilddaten 38 die relative Lage der Kamera 27 zu den Außenmarkierungen 33 und 34. Aus den berechneten relativen Lagen bestimmt die Auswerteeinrichtung 37 dann die relative Lage der Blattwurzel 23 zu den Außenmarkierungen 33 und 34, wobei diese relative Lage die Biegung des Rotorblatts 18 charakterisiert.

Aus Fig. 5 ist eine schematische und teilweise Darstellung des Rotors 6 mit einer Messvorrichtung 56 gemäß einer nicht unter den beanspruchten Erfindungsgegenstand fallenden vierten Ausführungsform ersichtlich, wobei zu den vorherigen Ausführungsformen ähnliche oder identische Merkmale mit denselben Bezugszeichen wie bei den vorherigen Ausführungsformen bezeichnet sind. Die vierte Ausführungsform bildet eine Abwandlung der ersten Ausführungsform, wobei die Kamera 27 auf einer dem Rotorblatt 18 gegenüberliegenden Seite der Rotornabe 8 angeordnet und an dieser befestigt ist. Das von den Innenmarkierungen 24 und 25 emittierte Licht trifft direkt auf die fotosensitive Fläche 30 der Kamera 27 auf, sodass keine Spiegel erforderlich sind. Zur weiteren Beschreibung der vierten Ausführungsform wird auf die Beschreibung der ersten Ausführungsform verwiesen.

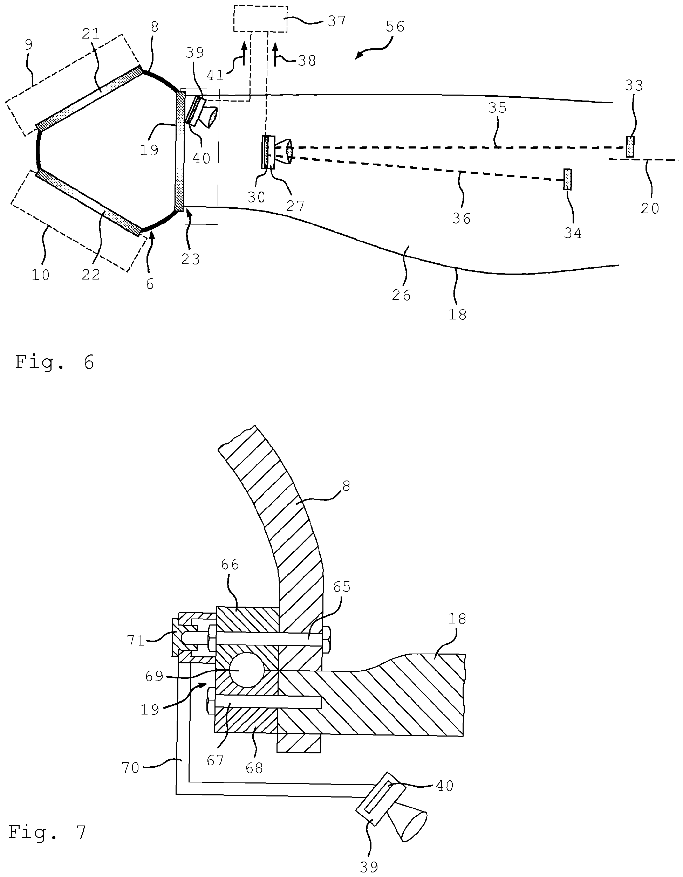

Aus Fig. 6 ist eine schematische und teilweise Darstellung des Rotors 6 mit einer Messvorrichtung 56 gemäß einer nicht unter den beanspruchten Erfindungsgegenstand fallenden fünften Ausführungsform ersichtlich, wobei zu den vorherigen Ausführungsformen ähnliche oder identische Merkmale mit denselben Bezugszeichen wie bei den vorherigen Ausführungsformen bezeichnet sind. Zusätzlich zu der Kamera 27 ist eine Kamera 39 mit einer fotosensitiven Fläche 40 vorgesehen, die im Bereich der Blattwurzel 23 an dem Rotorblatt 18 oder an dem Blattlager 19 befestigt ist. Die Kamera 27 ist dabei im Sichtfeld der Kamera 39 angeordnet. Jede der Kameras 27 und 39 ist mit der Auswerteeinrichtung 37 elektrisch verbunden und übermittelt an diese elektronische Bilddaten 38 bzw. 41. Dabei umfassen die Bilddaten 38 von der Kamera 27 eine von der relativen Lage der Kamera 27 zu den Außenmarkierungen 33 und 34 abhängige erste Lageinformation, wobei die von der Kamera 39 gelieferten Bilddaten 41 eine von der relativen Lage der Kamera 39 zu der Kamera 27 abhängige zweite Lageinformation umfassen. Die Kamera 39 ist vorzugsweise ortsfest zur Blattwurzel 23.

Aus den Bilddaten 41 berechnet die Auswerteeinrichtung 37 unter Anwendung wenigstens eines Bildauswertungsverfahrens die relative Lage der Kamera 39 zu der Kamera 27. Da die Kamera 39 im Bereich der Blattwurzel 23 angeordnet ist, charakterisiert diese Lage auch die relative Lage der Kamera 27 zu der Blattwurzel 23, sodass die relative Lage der Kamera 27 zu der Blattwurzel 23 mittels der Auswerteeinrichtung 37 berechnet wird. Ferner wird mittels der Auswerteeinrichtung 37 unter Anwendung wenigstens eines Bildauswertungsverfahrens aus den Bilddaten 38 die relative Lage der Kamera 27 zu den Außenmarkierungen 33 und 34 berechnet. Danach bestimmt die die Auswerteeinrichtung 37 aus den berechneten Lagen die relative Lage der Blattwurzel 23 zu den Außenmarkierungen 33 und 34, wobei diese relative Lage die Biegung des Rotorblatts 18 charakterisiert. Gemäß der fünften Ausführungsform sind somit keine Spiegel erforderlich.

Aus Fig. 7 ist eine schematische und teilweise Darstellung des Rotors 6 mit einer Messvorrichtung gemäß einer nicht unter den beanspruchten Erfindungsgegenstand fallenden Abwandlung der fünften Ausführungsform ersichtlich, wobei das Blattlager 19 einen mittels Bolzen 65 starr mit der Rotornabe 8 verbundenen Blattlagerteil 66 und einen mittels Bolzen 67 starr mit dem Rotorblatt 18 verbundenen Blattlagerteil 68 umfasst. Das Blattlager 19 ist hier als Kugellager ausgebildet, wobei die Kugeln des Blattlagers 19 schematisch angedeutet und mit dem Bezugszeichen 69 gekennzeichnet sind. Eine die Kamera 39 tragende Halterung 70 ist auf den dargestellten Bolzen 65 aufgesetzt und mittels einer Mutter 71 an diesem festgeschraubt, sodass die Kamera 39 starr an dem Blattlagerteil 66 und somit auch starr an der Rotornabe 8 gehalten ist. Da eine Drehung des Rotorblatts 18 um seine Blattachse 20 auch zu einer Drehung der Kamera 27 um die Blattachse 20 führt, ist mittels der Kamera 39 eine Drehung des Rotorblatts 18 um seine Blattachse 20 beobachtbar. Die Auswerteeinrichtung 37 berechnet somit vorzugsweise auch den Verdrehwinkel des Rotorblatts 18 um die Blattachse 20 relativ zu der Rotornabe 8.

Aus Fig. 8 ist ein von der Kamera 27 gemäß der ersten und/oder vierten Ausführungsform aufgenommenes Bild 45 in schematischer Darstellung ersichtlich, wobei die Bereiche 46 und 47 die Bilder der Außenmarkierungen 33 und 34 im nicht gebogenen Zustand des Rotorblatts 18 repräsentieren. Wird das Rotorblatt 18 gebogen, verschieben sich die Bilder der Außenmarkierungen in dem Bild 45, was durch Pfeile 59 und 60 angedeutet ist. Dabei kennzeichnen die Bereiche 48 und 49 die Bilder der Außenmarkierungen 33 und 34 im gebogenen Zustand des Rotorblatts 18. Die Lage der Bilder der Außenmarkierungen in dem Bild 45 repräsentiert somit die erste Lageinformation. Da die Lage der Bereiche 46 und 47 im Bild 45 bekannt ist, lässt sich mittels der Auswerteeinrichtung 37 auch die Verschiebung der Bereiche 48 und 49 gegenüber den Bereichen 46 und 47 bestimmen.

Die Bereiche 50 und 51 des Bilds 45 repräsentieren die Bilder der Innenmarkierungen 24 und 25 in einer ursprünglichen Lage der Kamera 27. Erfolgt ein Versatz der Kamera 27 relativ zu der Blattwurzel 23, so verschieben sich die Bilder der Innenmarkierungen in dem Bild 45, was durch Pfeile 61 und 62 angedeutet ist. Dabei kennzeichnen die Bereiche 52 und 53 die Bilder der Innenmarkierungen 24 und 25 nach dem Versatz der Kamera 27. Die Lage der Bilder der Innenmarkierungen in dem Bild 45 repräsentiert somit die zweite Lageinformation. Da die Lage der Bereiche 50 und 51 im Bild 45 bekannt ist, lässt sich mittels der Auswerteeinrichtung 37 auch die Verschiebung der Bereiche 52 und 53 gegenüber den Bereichen 50 und 51 bestimmen.

In den vorherigen Ausführungsformen sind die Markierungen 33 und 34 und ggf. die Markierungen 24 und 25 gemäß einer ersten Variante vorzugsweise jeweils durch eine Lichtquelle gebildet. Gemäß einer zweiten Variante sind wenigstens eine, mehrere oder alle der Markierungen durch Reflektoren 54 gebildet, die durch eine oder mehrere Lichtquellen 55 angestrahlt werden, was schematisch aus Fig. 9 ersichtlich ist, welche die Markierung 33 in Form eines Reflektors 54 zeigt. Das von der Lichtquelle 55 abgestrahlte Licht ist mit dem Bezugszeichen 63 gekennzeichnet.

Gemäß einer dritten Variante sind wenigstens eine, mehrere oder alle der Markierungen durch Lichtwellenleiter 64 gebildet, in die mittels einer oder mehrerer Lichtquellen 55 Licht 63 eingekoppelt wird, was schematisch aus Fig. 10 ersichtlich ist, welche die Markierung 33 in Form eines Lichtwellenleiters 64 zeigt.

Für jede als Reflektor oder Lichtwellenleiter ausgebildete Markierung kann eine separate Lichtquelle vorgesehen sein. Es ist aber auch möglich, dass mehrere oder alle Reflektoren oder Lichtwellenleiter von derselben Lichtquelle mit Licht versorgt werden. Beispielsweise kann für die Außenmarkierungen 33 und 34 eine gemeinsame oder jeweils eine separate Lichtquelle vorgesehen sein. Ferner kann für die Innenmarkierungen 24 und 25 eine gemeinsame oder jeweils eine separate Lichtquelle vorgesehen sein.

### Bezugszeichenliste

1 Windkraftanlage
2 Fundament
3 Turm
4 Maschinenhaus
5 Maschinenträger
6 Rotor
7 Rotorachse
8 Rotornabe
9 Rotorblatt
10 Rotorblatt
11 Blattachse
12 Blattachse
13 Blattwinkelverstellantrieb
14 Blattwinkelverstellantrieb
15 Wind
16 Generator
17 Windkraftanlagensteuerung
18 Rotorblatt
19 Blattlager
20 Blattachse
21 Blattlager
22 Blattlager
23 Blattwurzel
24 Innenmarkierung
25 Innenmarkierung
26 Hohlraum des Rotorblatts
27 Kamera
28 Spiegel
29 Spiegel
30 fotosensitive Fläche der Kamera
31 Strahlengang
32 Strahlengang
33 Außenmarkierung
34 Außenmarkierung
35 Strahlengang
36 Strahlengang
37 Auswerteeinrichtung
38 Bilddaten
39 Kamera
40 fotosensitive Fläche der Kamera
41 Bilddaten
42 Spannungs- oder Dehnungssensor
43 Spannungs- oder Dehnungssensor
44 Verformungsdaten
45 von der Kamera aufgenommenes Bild
46 Bild der Außenmarkierung ohne Biegung
47 Bild der Außenmarkierung ohne Biegung
48 Bild der Außenmarkierung mit Biegung
49Bild der Außenmarkierung mit Biegung
50 Bild der Innenmarkierung ohne Versatz
51 Bild der Innenmarkierung ohne Versatz
52 Bild der Innenmarkierung mit Versatz
53 Bild der Innenmarkierung mit Versatz
54 Reflektor
55 Lichtquelle
56 Messvorrichtung
57 Halterung
58 Blattwinkelverstellantrieb
59 Bildverschiebung
60 Bildverschiebung
61 Bildverschiebung
62 Bildverschiebung
63 Licht von Lichtquelle
64 Lichtwellenleiter
65 Bolzen
66 Teil des Blattlagers
67 Bolzen
68 Teil des Blattlagers
69 Kugeln des Blattlagers
70 Halterung
71 Mutter

## Patentansprüche

1. Vorrichtung zur optischen Messung der Biegung eines Rotorblatts (18) einer Windkraftanlage (1), welches mit seiner Blattwurzel (23) an einer Rotornabe (8) eines Rotors (6) befestigt ist, mit wenigstens einer im Abstand zur Blattwurzel (23) am Rotorblatt (18) befestigten, Licht emittierenden Außenmarkierung (33), wenigstens einer am Rotorblatt (18) befestigten ersten Kamera (27), welche das von der Außenmarkierung (23) emittierte Licht (35) empfängt und eine von der relativen Lage der ersten Kamera (27) zu der Außenmarkierung (33) abhängige erste Lageinformation zur Verfügung stellt, einer mit der ersten Kamera (27) gekoppelten Auswerteeinrichtung (37) und einem Positionserfassungsmittel, welches die relative Lage der ersten Kamera (27) zu der Blattwurzel (23) erfasst und eine von dieser Lage abhängige zweite Lageinformation zur Verfügung stellt, wobei die Auswerteeinrichtung (37) wenigstens eine die Biegung des Rotorblatts (18) charakterisierende Größe unter Auswertung der Lageinformationen bestimmt, **dadurch gekennzeichnet, dass** das Positionserfassungsmittel wenigstens eine an oder im Bereich der Blattwurzel (23) am Rotor (6) befestigte, Licht emittierende Innenmarkierung (24) und eine zu der ersten Kamera (27) ortsfeste zweite Kamera (39) umfasst, die das von der Innenmarkierung (24) emittierte Licht (31) empfängt, wobei die Sichtfelder der Kameras sich in oder im Wesentlichen in einander entgegengesetzte Richtungen erstrecken und die von dem Positionserfassungsmittel zur Verfügung gestellte zweite Lageinformation abhängig von der relativen Lage der ersten Kamera (27) zu der Innenmarkierung (24) ist.

2. Vorrichtung nach Anspruch 1,
**dadurch gekennzeichnet, dass**
die wenigstens eine die Biegung des Rotorblatts (18) charakterisierende Größe unabhängig von der Position der ersten Kamera (27) ist.

3. Vorrichtung nach einem der vorangehenden Ansprüche, **dadurch gekennzeichnet, dass**
- im Abstand zur Blattwurzel (23) am Rotorblatt (18) mehrere, Licht emittierende Außenmarkierungen (33, 34) befestigt sind, die eine unterschiedliche Entfernung zur Blattwurzel (23) aufweisen,
- die erste Kamera (27) das von den Außenmarkierungen (33, 34) emittierte Licht (35, 36) empfängt,
- die von der ersten Kamera (27) zur Verfügung gestellte erste Lageinformation abhängig von der relativen Lage der ersten Kamera (27) zu den Außenmarkierungen (33, 34) ist.

4. Vorrichtung nach einem der vorangehenden Ansprüche,
**dadurch gekennzeichnet, dass**
die Auswerteeinrichtung (37), als die wenigstens eine die Biegung des Rotorblatts (18) charakterisierende Größe die relative Lage der Blattwurzel (23) zu der oder den Außenmarkierungen (33, 34) bestimmt.

5. Vorrichtung nach einem der vorangehenden Ansprüche,
**dadurch gekennzeichnet, dass**
- die Auswerteeinrichtung (37) unter Auswertung der zweiten Lageinformation die relative Lage der ersten Kamera (27) zu der Blattwurzel (23) berechnet,
- die Auswerteeinrichtung (37) unter Auswertung der ersten Lageinformation die relative Lage der ersten Kamera (27) zu der oder den Außenmarkierungen (33, 34) berechnet,
- die Auswerteeinrichtung (37) aus den berechneten Lagen die relative Lage der Blattwurzel (23) zu der oder den Außenmarkierungen (33, 34) bestimmt.

6. Vorrichtung nach einem der vorangehenden Ansprüche,
**dadurch gekennzeichnet, dass**
die erste Kamera (27) von der oder von den Außenmarkierungen (33, 34) wenigstens ein Bild (45) aufnimmt und dieses in Form von Bilddaten (38) als die erste Lageinformation der Auswerteeinrichtung (37) zur Verfügung stellt.

7. Vorrichtung nach Anspruch 6,
**dadurch gekennzeichnet, dass**
die Auswerteeinrichtung (37) unter Anwendung wenigstens eines Bildauswertungsverfahrens aus den Bilddaten (38) die relative Lage der ersten Kamera (27) zu der oder den Außenmarkierungen (33, 34) bestimmt.

8. Vorrichtung nach einem der vorangehenden Ansprüche.,
**dadurch gekennzeichnet, dass**
die Kameras (27, 39) in enger räumlicher Nähe zueinander angeordnet sind.

9. Vorrichtung nach einem der vorangehenden Ansprüche,
**dadurch gekennzeichnet, dass**
die zweite Kamera (39) von der Innenmarkierung (24) wenigstens ein Bild aufnimmt und dieses in Form von Bilddaten (41) als die zweite Lageinformation der Auswerteeinrichtung (37) zur Verfügung stellt.

10. Vorrichtung nach einem der vorangehenden Ansprüche,
**dadurch gekennzeichnet, dass**
das Rotorblatt (18) einen Hohlraum (26) umfasst, in dem die Kameras (27, 39) und die Außenmarkierung (33) oder die Außenmarkierungen (33, 34) angeordnet sind.

11. Vorrichtung nach einem der vorangehenden Ansprüche,
**dadurch gekennzeichnet, dass**
die Kameras (27, 39) zu einer baulichen Einheit zusammengefasst sind.

## Claims

1. Device for optically measuring the bending of a rotor blade (18) of a wind turbine (1) secured by its blade root (23) to a rotor hub (8) of a rotor (6), with at least one light-emitting external marking (33) secured to the rotor blade (18) at a distance from the blade root (23), at least one first camera (27) secured to the rotor blade (18), receiving light (35) emitted by the external marking (23) and providing first position information dependent on a relative position of the first camera (27) with respect to the external marking (33), an evaluation device (37) coupled to the first camera (27) and including a position detector which detects the relative position of the first camera (27) with respect to the blade root (23) and provides second position information dependent on this position, wherein the evaluation device (37) determines at least one variable characterising the bending of the rotor blade (18) by evaluating the position information, **characterised in that** the position detector comprises at least one light-emitting internal marking (24) secured to the rotor (6) at or in the region of the blade root (23) and a second camera (39) fixed in position relative to the first camera (27) receiving light (31) emitted by the internal marking (24), wherein the fields of vision of the cameras extend in or substantially in opposing directions and the second position information provided by the position detector is dependent on the relative position of the first camera (27) with respect to the internal marking (24).

2. Device according to claim 1, **characterised in that** the at least one variable characterising the bending of the rotor blade (18) is independent of the position of the first camera (27) .

3. Device according to any one of the preceding claims, **characterised in that**
- a plurality of light-emitting external markings (33, 34) are secured to the rotor blade (18) at a distance from the blade root (23), having a different distance from the blade root (23),
- the first camera (27) receives the light (35, 36) emitted by the external markings (33, 34), and
- the first position information provided by the first camera (27) is dependent on the relative position of the first camera (27) with respect to the external markings (33, 34).

4. Device according to any one of the preceding claims, **characterised in that** the evaluation device (37) determines the relative position of the blade root (23) with respect to the external marking(s) (33, 34) as the at least one variable characterising the bending of the rotor (18).

5. Device according to any one of the preceding claims, **characterised in that**
- the evaluation device (37) calculates the relative position of the first camera (27) with respect to the blade root (23) by evaluating the second position information,
- the evaluation device (37) calculates the relative position of the first camera (27) with respect to the external marking(s) (33, 34) by evaluating the first position information, and
- the evaluation device (37) determines the relative position of the blade root (23) with respect to the external marking(s) (33, 34) from the calculated positions.

6. Device according to any one of the preceding claims, **characterised in that** the first camera (27) takes at least one image (45) of the external markings (33, 34) and provides this in the form of image data (38) to the evaluation device (37) as the first position information.

7. Device according to claim 6, **characterised in that** the evaluation device (37) determines the relative position of the first camera (27) with respect to the external marking(s) (33, 34) from the image data (38) using at least one image evaluation method.

8. Device according to any one of the preceding claims, **characterised in that** the cameras (27, 39) are arranged in close spatial proximity to each other.

9. Device according to any one of the preceding claims, **characterised in that** the second camera (39) takes at least one image of the internal marking (24) and provides this in the form of image data (41) as the second position information for the evaluation device (37).

10. Device according to any one of the preceding claims, **characterised in that** the rotor blade (18) comprises a hollow space (26) in which the cameras (27, 39) and the external marking (33) or the external markings (33, 34) is or are arranged.

11. Device according to any one of the preceding claims, **characterised in that** the cameras (27, 39) are combined into a single structural unit.

## Revendications

1. Dispositif pour la mesure optique de la flexion d'une pale de rotor (18) d'une éolienne (1), qui est fixée avec sa base de pale (23) à un moyeu de rotor (8) d'un rotor (6), avec au moins un marquage externe (33) fixé à distance de la base de pale (23) à la pale de rotor (18) et émettant de la lumière, au moins une première caméra (27) fixée à la pale de rotor (18), qui reçoit la lumière (35) émise par le marquage externe (23) et qui met à disposition une première information de position dépendant de la position relative de la première caméra (27) par rapport au marquage externe (33), un dispositif d'analyse (37), couplé à la première caméra (27), et un moyen de détermination de position, qui détermine la position relative de la première caméra (27) par rapport à la base de pale (23) qui met à disposition une deuxième information de position dépendant cette position, le dispositif d'analyse (37) déterminant au moins une grandeur caractérisant la flexion de la pale de rotor (18) en analysant les informations de position, **caractérisé en ce que** I moyen de détermination de position comprenant au moins un marquage interne (24) fixé sur ou au niveau de la base de pale (23) au rotor (6) et émettant de la lumière, et une deuxième caméra (39), fixe par rapport à la première caméra (27), qui reçoit la lumière (31) émise par le marquage interne (24), les champs de vision des caméras s'étendant dans ou globalement dans des directions opposées entre elles et la deuxième information, mise à disposition par le moyen de détermination de position, dépendant de la position relative de la première caméra (27) par rapport au marquage interne (24).

2. Dispositif selon la revendication 1,
**caractérisé en ce que**
l'au moins une grandeur caractérisant la flexion de la pale de rotor (18) est indépendante de la position de la première caméra (27).

3. Dispositif selon l'une des revendications précédentes,
**caractérisé en ce que**
- à distance de la base de pale (23), sur la pale de rotor (18), sont fixés plusieurs marquages externes (33, 34) émettant de la lumière, qui présentent des éloignements différents par rapport à la base de pale (23),
- la première caméra (27) reçoit la lumière (35, 36) émise par les marquages externes (33, 34),
- la première information de position mise à disposition par la première caméra (27) dépend de la position relative de la première caméra (27) par rapport aux marquages externes (33, 34).

4. Dispositif selon l'une des revendications précédentes,
**caractérisé en ce que**
le dispositif d'analyse (37) détermine, en tant que l'au moins une grandeur caractérisant la flexion de la pale de rotor (18), la position relative de la base de pale (23) par rapport au(x) marquage(s) externe(s) (33, 34).

5. Dispositif selon l'une des revendications précédentes,
**caractérisé en ce que**
- le dispositif d'analyse (37) calcule, en analysant la deuxième information de position, la position relative de la première caméra (27) par rapport à la base de pale (23),
- le dispositif d'analyse (37) calcule, en analysant la première information de position, la position relative de la première caméra (27) par rapport au(x) marquage(s) externe(s) (33, 34),
- le dispositif d'analyse (37) calcule, à partir des positions calculées, la position relative de la base de pale (23) par rapport au(x) marquage(s) externe(s) (33, 34).

6. Dispositif selon l'une des revendications précédentes,
**caractérisé en ce que**
la première caméra (27) enregistre, du ou des marquage(s) externe(s) (33, 34), une image (45) et la met à disposition, sous la forme de données d'image (38) n tant que première information de position, pour le dispositif d'analyse (37).

7. Dispositif selon la revendication 6,
**caractérisé en ce que**
le dispositif d'analyse (37) détermine, à l'aide d'au moins un procédé d'analyse d'image, à partir des données d'image (38), la position relative de la première caméra (27) par rapport au(x) marquage(s) externe(s) (33, 34).

8. Dispositif selon l'une des revendications précédentes,
**caractérisé en ce que**
les caméras (27, 39) sont disposées à proximité immédiate entre elles.

9. Dispositif selon l'une des revendications précédentes,
**caractérisé en ce que**
la deuxième caméra (39) enregistre, du marquage interne (24), au moins une image la met à disposition sous la forme de données d'image (41), en tant que deuxième information de position, pour le dispositif d'analyse (37).

10. Dispositif selon l'une des revendications précédentes,
**caractérisé en ce que**
la pale de rotor (18) comprend une cavité (26) dans laquelle sont disposés les caméras (27, 39) et le marquage externe (33) ou les marquages externes (33, 34).

11. Dispositif selon l'une des revendications précédentes,
**caractérisé en ce que**
les caméras (27, 39) sont regroupées en une unité modulaire.
